(19) Europäisches Patentamt / European Patent Office / Office européen des brevets

(11) **EP 1 223 070 B1**

(12) **FASCICULE DE BREVET EUROPEEN**

(45) Date de publication et mention
de la délivrance du brevet:
**19.05.2010 Bulletin 2010/20**

(51) Int Cl.:
*F16H 63/50* (2006.01)     *B60W 30/18* (2006.01)
*F16H 61/04* (2006.01)     *F16H 59/20* (2006.01)
*B60W 10/06* (2006.01)     *B60W 10/10* (2006.01)

(21) Numéro de dépôt: **02290068.2**

(22) Date de dépôt: **11.01.2002**

(54) **Procédé de commande d'un groupe motopropulseur pendant les changements de rapports de sa transmission automatique**

Verfahren zum Steuern einer Antriebseinheit beim Gangwechsel eines Automatikgetriebes

Method for controlling a propulsion unit during gear shifts of an automatic transmission

(84) Etats contractants désignés:
**BE DE ES**

(30) Priorité: **16.01.2001 FR 0100512**

(43) Date de publication de la demande:
**17.07.2002 Bulletin 2002/29**

(73) Titulaire: **RENAULT S.A.S.**
**92100 Boulogne Billancourt (FR)**

(72) Inventeur: **Aubert, Olivier**
**92370 Chaville (FR)**

(56) Documents cités:
**EP-A- 0 885 767     DE-A- 19 845 157**
**DE-A- 19 950 664     US-A- 6 064 934**

## Description

L'invention concerne un procédé de commande d'un groupe motopropulseur de véhicule automobile.

L'invention concerne plus particulièrement un procédé de commande d'un groupe motopropulseur de véhicule automobile comportant un moteur, qui est commandé par une unité électronique de pilotage, et une boîte de vitesses à changements de rapports automatisés, qui est commandée par une unité électronique de commande, du type dans lequel l'unité de pilotage reçoit, de la part du conducteur et par l'intermédiaire d'un dispositif de commande de l'accélération, une information représentative de la demande de couple moteur, ou consigne de couple conducteur, en fonction de laquelle l'unité de pilotage est susceptible de piloter la charge du moteur, et du type dans lequel l'unité de pilotage, lorsqu'elle détecte une demande de passage d'un rapport initial de transmission à un nouveau rapport de transmission inférieur au rapport initial, le couple moteur étant sensiblement constant ou en hausse, met en oeuvre une stratégie de transition au cours de laquelle elle diminue le couple moteur.

Sur les groupes motopropulseurs à transmission automatique, la pédale d'accélérateur permet au conducteur de commander à la fois le couple délivré par le moteur et le rapport de transmission engagé.

Depuis de nombreuses années déjà, il existe des boîtes de vitesses à changements de rapports automatisés.

Dans cette catégorie, on retrouve notamment les boîtes automatiques classiques dans lesquelles différents trains épicycloïdaux permettent de définir des rapports étagés prédéterminés, la sélection des rapports se faisant en actionnant différents freins ou embrayages qui permettent d'immobiliser sélectivement certains des composants du (ou des) train(s) épicycloïdal(aux) de manière à déterminer un rapport de vitesse entre l'arbre de sortie et l'arbre d'entrée de la boîte de vitesses.

Un autre type de boîte de vitesses à changements de rapports automatisés est constitué par les boîtes de vitesses mécaniques classiques, à crabots, dans lesquelles la sélection et l'engagement des rapports ne sont plus assurés directement par le conducteur au moyen d'un levier, mais par des vérins gérés par une unité de commande. Ces vérins peuvent n'intervenir qu'à la sollicitation expresse du conducteur, auquel cas ce dernier reste entièrement maître de l'instant du changement de rapport, ou au contraire de manière automatique, sous le contrôle de l'unité de commande de boîte, en fonction de paramètres analogues à ceux utilisés pour déterminer les instants de changement de rapport dans une boîte automatique classique.

Une telle boîte de vitesses sera appelée boîte de vitesses robotisée dans la suite du texte.

Généralement, l'unité de pilotage du moteur comporte un algorithme de commande du moteur qui détermine la consigne de couple moteur, par exemple suivant des valeurs cartographiées par rapport au régime moteur et à la valeur d'enfoncement de la pédale d'accélérateur.

L'unité électronique de commande de la boîte de vitesses comporte un algorithme de commande qui détermine une consigne de rapport de transmission, par exemple suivant des lois de passage du rapport de transmission en fonction de valeurs cartographiées de la vitesse du véhicule par rapport à une valeur d'enfoncement de la pédale d'accélérateur.

Dans le cas des boîtes de vitesses à rapports étagés et à changements automatisés, il est apparu qu'une très bonne maîtrise de la phase de changement de rapport était primordiale pour une conduite agréable du véhicule et pour le confort des passagers.

Un tel agrément et un tel confort ne peuvent être obtenus qu'en supprimant complètement les à-coups susceptibles de survenir au cours du changement de rapport.

Dans certaines conditions de fonctionnement du véhicule, par exemple lorsque le véhicule est dans une montée ou lorsque le conducteur enfonce la pédale d'accélérateur en vue d'effectuer un dépassement, l'algorithme de commande de la boîte de vitesses déclenche le passage d'un rapport de transmission inférieur de manière à provoquer une accélération du véhicule supérieure à celle obtenue sur le rapport initial.

Dans ce type de situation, le changement de rapport de transmission s'effectue alors que l'algorithme de commande du moteur demande quasiment le couple maximal disponible au moteur.

Ce couple maximal disponible est sensiblement équivalent pour chacun des deux régimes de rotation du moteur associés aux deux rapports de transmission, ou il peut être supérieur pour le régime de rotation associé au nouveau rapport de transmission, si le moteur était initialement dans un état de sous-régime.

Par conséquent, le raccourcissement du rapport de démultiplication, alors que le couple moteur est sensiblement constant ou en hausse, provoque une augmentation brutale de l'accélération du véhicule.

Ce phénomène nuit au confort des utilisateurs du véhicule qui subissent des à-coups.

Il est déjà connu, lors du passage montant des rapports de transmission, de prévoir une stratégie de transition au cours de laquelle le moteur est piloté pour ne fournir qu'une partie seulement du couple demandé par le conducteur, par exemple en réduisant cette demande de couple d'un pourcentage fixe.

Ce type de stratégie ne s'applique pas lorsque la boîte de vitesse commande le passage d'un rapport de transmission inférieur au rapport initial.

Par la publication DE-A-198.45.157, on connaît un procédé de commande du couple délivré par un moteur de véhicule équipé d'une boîte de vitesses automatique selon le préambule de la revendication 1. Des signaux sont échangés de manière permanente entre l'unité électronique de commande du moteur et l'unité électronique de contrôle de la boîte de vitesses, notamment concernant le couple du moteur et des paramètres associés du moteur. Ce procédé établit une valeur dominante de couple demandé par l'intermédiaire d'un filtre de confort de conduite. Cette valeur demandée est filtrée pour produire un couple demandé corrigé, qui, une fois comparé à un signal d'entrée, produit une nouvelle situation de conduite, il prévoit notamment (revendication 20), de réduire la valeur du couple désiré (M_t_ziel) sur requête de l'unité électronique de contrôle de la boîte de vitesses. Toutefois, la valeur de couple qui est diminuée est celle du couple moteur et non pas celle du couple demandé.

L'invention vise à remédier à ces inconvénients en proposant un procédé de commande d'un groupe motopropulseur de véhicule automobile du type décrit précédemment, caractérisé en ce que la stratégie de transition consiste à déterminer, à intervalles de temps réguliers, à partir de la consigne de couple conducteur et à partir de la puissance maximale disponible au régime de rotation courant du moteur, une consigne de couple limité en fonction de laquelle l'unité de pilotage commande la charge du moteur, de manière que l'augmentation de la puissance transmise aux roues du véhicule soit progressive entre le rapport initial de transmission et le nouveau rapport de transmission.

Selon d'autres caractéristiques de l'invention :

- la stratégie de transition consiste à effectuer, à intervalles de temps réguliers, les opérations suivantes :

  • déterminer une puissance effective en choisissant la valeur la plus faible entre, d'une part, une consigne de puissance, qui est égale au produit de la consigne de couple conducteur par le régime de rotation courant du moteur et, d'autre part, la puissance maximale disponible au régime de rotation courant du moteur ;
  • calculer une puissance filtrée en appliquant à la puissance effective un algorithme de filtrage qui produit une augmentation progressive de la puissance filtrée ;
  • déterminer la consigne de couple limité en choisissant la valeur la plus faible entre la consigne de couple conducteur et le couple filtré, qui est égal à la puissance filtrée rapportée sur le régime de rotation courant du moteur ;

- l'unité de pilotage désactive la stratégie de transition lorsque les deux conditions suivantes sont remplies simultanément :

  • l'unité de pilotage a détecté la fin du passage du rapport initial de transmission au nouveau rapport de transmission ;
  • et la consigne de couple conducteur est inférieure ou égale au couple filtré ;

- on substitue aux consignes de couple des consignes de puissance associées qui sont obtenues respectivement en effectuant le produit de chaque consigne de couple par le régime de rotation associé du moteur.

D'autres caractéristiques et avantages de l'invention apparaîtront à la lecture de la description détaillée qui suit pour la compréhension de laquelle on se reportera aux dessins annexés dans lesquels :

- la figure 1 est un diagramme schématique qui représente un groupe motopropulseur commandé par un procédé conforme aux enseignements de l'invention ;
- la figure 2 est un diagramme schématique qui illustre le fonctionnement de la stratégie de transition du procédé de commande selon l'invention.

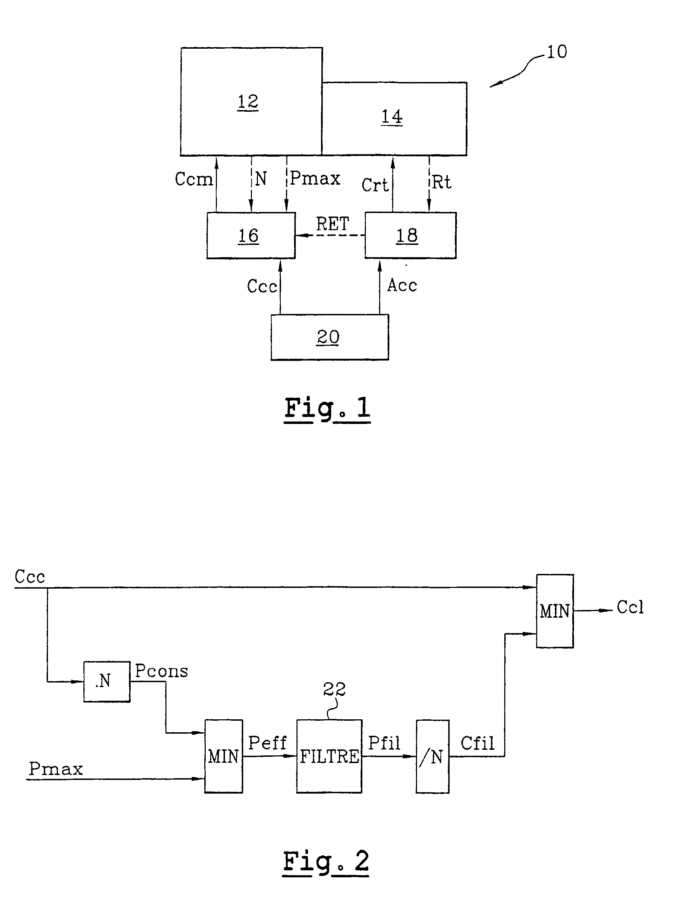

On a représenté schématiquement sur la figure 1 un groupe motopropulseur 10 de véhicule automobile qui comporte un moteur 12 commandé selon un procédé conforme aux enseignements de l'invention.

Le moteur 12 est accouplé à une boîte de vitesses 14 à changements de rapports automatisés.

La boîte de vitesses 14 peut être indifféremment une boîte automatique classique ou une boîte de vitesses robotisée.

Le moteur 12 est commandé par une unité électronique de pilotage 16 et la boîte de vitesses 14 est commandée par une unité électronique de commande 18.

Le moteur 12 est par exemple du type à combustion interne à essence et il comporte avantageusement un volet d'admission des gaz, ou boîtier papillon, du type motorisé, un dispositif d'injection, et un dispositif d'allumage du mélange carburé qui sont commandés électroniquement par l'unité de pilotage 16.

L'unité de pilotage 16 commande la charge admise dans les cylindres du moteur 12 en fonction d'une consigne de couple moteur $C_{cm}$, et le moteur délivre alors un couple moteur $C_m$ déterminé aux roues du véhicule.

Le conducteur du véhicule agit sur un dispositif de commande de l'accélération du véhicule, par exemple une pédale d'accélérateur 20, qui transmet à l'unité de pilotage 16 une information représentative de la demande de couple moteur $C_m$, ou consigne de couple conducteur $C_{cc}$.

Dans ce cas, la consigne de couple moteur $C_{cm}$ est équivalente à la consigne de couple conducteur $C_{cc}$.

De manière classique, l'unité électronique de commande 18 de la boîte de vitesses 14 comporte un algorithme de commande qui détermine une consigne de rapport de transmission $C_{rt}$, par exemple suivant des lois de passage du rapport de transmission $R_t$ en fonction de valeurs cartographiées de la vitesse du véhicule par rapport à une valeur d'enfoncement de la pédale d'accélérateur 20, qui représente l'accélération Acc demandée par le conducteur.

Conformément aux enseignements de l'invention, l'unité de pilotage 16 met en oeuvre une stratégie de transition ST lorsqu'elle détecte une demande de passage d'un rapport initial de transmission $R_{ti}$ à un nouveau rapport de transmission $R_{tn}$ inférieur au rapport initial $R_{ti}$, le couple moteur $C_m$ étant sensiblement constant ou en hausse. Cette demande sera appelée « rétrogradage » RET dans la suite de la description.

L'unité de pilotage 16 est par exemple informée du rétrogradage RET par l'unité de commande 18.

La stratégie de transition ST selon l'invention consiste à déterminer, à intervalles de temps τ réguliers, à partir de la consigne de couple conducteur $C_{cc}$ et à partir de la puissance maximale $P_{max}$ disponible au régime de rotation courant N du moteur 12, une consigne de couple limité $C_{cl}$ en fonction de laquelle l'unité de pilotage 16 commande la charge du moteur 12, de manière que l'augmentation de la puissance transmise aux roues du véhicule, ou augmentation du couple moteur $C_m$, soit progressive entre le rapport initial de transmission $R_{ti}$ et le nouveau rapport de transmission $R_{tn}$.

Lorsque la stratégie de transition ST est mise en oeuvre la consigne de couple moteur $C_{cm}$ est alors équivalente à la consigne de couple limité $C_{cl}$.

La figure 2 illustre le principe de fonctionnement de la stratégie de transition ST selon l'invention à un instant donné t, en vue de déterminer la consigne de couple limité $C_{cl}$.

La stratégie de transition ST commence par convertir la consigne de couple conducteur $C_{cc}$ en consigne de puissance $P_{cons}$ demandée au moteur 12. Pour cela il suffit d'effectuer le produit de la consigne de couple conducteur $C_{cc}$ par le régime de rotation courant N du moteur 12, c'est-à-dire le régime de rotation N du moteur 12 à l'instant t.

La stratégie de transition ST détermine ensuite une puissance effective $P_{eff}$ en choisissant la valeur la plus faible entre la consigne de puissance $P_{cons}$ et la puissance maximale $P_{max}$ disponible au régime de rotation courant N du moteur 12.

On note que la puissance effective $P_{eff}$ correspond à la puissance $P_m$ qui serait effectivement demandée au moteur 12 si l'on n'appliquait pas la stratégie de transition ST, la puissance $P_m$ demandée au moteur 12 ne pouvant dépasser la puissance maximale $P_{max}$ disponible.

La stratégie de transition ST détermine ensuite une puissance filtrée $P_{fil}$ en appliquant à la puissance effective $P_{eff}$ un algorithme de filtrage, ou filtre 22, qui produit une augmentation progressive de la puissance filtrée $P_{fil}$ au cours du temps.

Le filtre 22 doit permettre d'obtenir un profil d'augmentation de la puissance filtrée $P_{fil}$ qui soit plus acceptable, c'est à dire plus progressif, que le profil normal d'augmentation de la puissance effective $P_{eff}$ en l'absence de stratégie de transition ST.

Le filtre 22 est par exemple un filtre du premier ordre et l'équation de calcul de la puissance filtrée $P_{fil}$ à un instant t donné peut s'exprimer de la manière suivante :

$$P_{fil}(t) = k.P_{eff}(t) + (1-k).P_{fil}(t-\tau)$$

Dans cette équation, la lettre « k » représente une constante qui est fixée par conception et le terme $P_{fil}(t-\tau)$ représente la puissance filtrée $P_{fil}$ qui a été calculée à l'instant $t-\tau$, c'est à dire à l'itération précédente.

Puis la stratégie de transition ST convertit la puissance filtrée $P_{fil}$ en couple filtré $C_{fil}$. Pour cela il suffit d'effectuer le rapport de la puissance filtrée $P_{fil}$ sur le régime de rotation courant N du moteur 12.

Enfin la stratégie de transition ST détermine la consigne de couple limité $C_{cl}$ en choisissant la valeur la plus faible entre la consigne de couple conducteur $C_{cc}$ et le couple filtré $C_{fil}$.

Avantageusement, la stratégie de transition ST est maintenue active pendant toute la durée du rétrogradage RET, c'est à dire jusqu'à ce que l'unité de pilotage 16 détecte la fin du rétrogradage RET, et jusqu'à ce que la consigne de couple conducteur Ccc soit inférieure ou égale à la consigne de couple limité Ccl.

La fin du rétrogradage RET est détectée ici lorsque l'unité de commande 18 indique à l'unité de pilotage 16 que le nouveau rapport de transmission $R_{tn}$ est engagé.

On note que la consigne de couple conducteur $C_{cc}$ peut devenir inférieure ou égale à la consigne de couple limité $C_{cl}$ sous l'effet du filtre 22 ou en raison d'une baisse de la consigne de couple conducteur $C_{cc}$, par exemple lorsque le conducteur souhaite diminuer l'accélération du véhicule.

On a décrit ici un mode de réalisation dans lequel le moteur 12 est commandé par une consigne de couple moteur $C_{cm}$, mais bien entendu le procédé selon l'invention s'applique aussi à un moteur 12 commandé par une consigne de puissance.

Dans ce cas les consignes de couple, notamment la consigne de couple conducteur $C_{cc}$ et la consigne de couple limité $C_{cl}$, sont remplacées par des consignes de puissance associées qui sont obtenues respectivement en effectuant le produit de chaque consigne de couple donnée par le régime de rotation N associé du moteur (12).

Ainsi, l'unité de pilotage 16 peut commander le moteur 12 en fonction d'une consigne de puissance conducteur à l'instant t qui est égale au produit de la consigne de couple conducteur $C_{cc}$ à l'instant t par le régime de rotation N du moteur 12 à l'instant t.

De manière similaire on peut calculer une consigne de puissance limitée à l'instant t en effectuant le produit de la consigne de couple limité $C_{cl}$ à l'instant t par le régime de rotation N du moteur 12 à l'instant t.

**Revendications**

1.  Procédé de commande d'un groupe motopropulseur (10) de véhicule automobile comportant un moteur (12), qui est commandé par une unité électronique de pilotage (16), et une boîte de vitesses (14) à changements de rapports ($R_t$) automatisés, qui est commandée par une unité électronique de commande (18), du type dans lequel l'unité de pilotage (16) reçoit, de la part du conducteur et par l'intermédiaire d'un dispositif de commande (20) de l'accélération, une information représentative de la demande de couple moteur ($C_m$), ou consigne de couple conducteur ($C_{cc}$), en fonction de laquelle l'unité de pilotage (16) est susceptible de piloter la charge du moteur (12), et du type dans lequel l'unité de pilotage (16), lorsqu'elle détecte une demande de passage d'un rapport initial de transmission ($R_{ti}$) à un nouveau rapport de transmission ($R_{tn}$) inférieur au rapport initial ($R_{ti}$), le couple moteur ($C_m$) étant sensiblement constant ou en hausse, met en oeuvre une stratégie de transition (ST) au cours de laquelle elle diminue le couple moteur ($C_m$),

    **caractérisé en ce que** la stratégie de transition (ST) consiste à déterminer, à intervalles de temps ($\tau$) réguliers, à partir de la consigne de couple conducteur ($C_{cc}$) et à partir de la puissance maximale ($P_{max}$) disponible au régime de rotation courant (N) du moteur (12), une consigne de couple limité ($C_{cl}$) en fonction de laquelle l'unité de pilotage (16) commande la charge du moteur (12), de manière que l'augmentation de la puissance transmise aux roues du véhicule soit progressive entre le rapport initial de transmission ($R_{ti}$) et le nouveau rapport de transmission ($R_{tn}$).

2.  Procédé de commande selon la revendication précédente, **caractérisé en ce que** la stratégie de transition (ST) consiste à effectuer, à intervalles de temps ($\tau$) réguliers, les opérations suivantes :

    - déterminer une puissance effective ($P_{eff}$) en choisissant la valeur la plus faible entre, d'une part, une consigne de puissance ($P_{cons}$), qui est égale au produit de la consigne de couple conducteur ($C_{cc}$) par le régime de rotation courant (N) du moteur (12) et, d'autre part, la puissance maximale ($P_{max}$) disponible au régime de rotation courant (N) du moteur (12) ;
    - calculer une puissance filtrée ($P_{fil}$) en appliquant à la puissance effective ($P_{eff}$) un algorithme de filtrage qui produit une augmentation progressive de la puissance filtrée ($P_{fil}$) ;
    - déterminer la consigne de couple limité ($C_{cl}$) en choisissant la valeur la plus faible entre la consigne de couple conducteur ($C_{cc}$) et le couple filtré ($C_{fil}$), qui est égal à la puissance filtrée ($P_{fil}$) rapportée sur le régime de rotation courant (N) du moteur (12).

3.  Procédé de commande selon la revendication précédente, **caractérisé en ce que** l'unité de pilotage (16) désactive la stratégie de transition (ST) lorsque les deux conditions suivantes sont remplies simultanément :

    - l'unité de pilotage (16) a détecté la fin du passage du rapport initial de transmission ($R_{ti}$) au nouveau rapport de transmission ($R_{tn}$) ;
    - et la consigne de couple conducteur ($C_{cc}$) est inférieure ou égale au couple filtré ($C_{fil}$).

4.  Procédé de commande selon l'une quelconque des revendications précédentes, **caractérisé en ce que** l'on substitue aux consignes de couple ($C_{cm}$, $C_{cc}$, $C_{cl}$) des consignes de puissance associées qui sont obtenues respectivement en effectuant le produit de chaque consigne de couple ($C_{cm}$, $C_{cc}$, $C_{cl}$) par le régime de rotation (N) associé du moteur (12).

**Claims**

1. Method for controlling a drive train (10) of a motor vehicle comprising an engine (12), which is controlled by an electronic drive unit (16), and a gearbox (14), with automated gear changes (Rt), which is controlled by an electronic control unit (18), of the type in which the drive unit (16) receives, from the driver and via an acceleration control device (20), an item of information representing the engine torque requirement ($C_m$), or a drive torque setting ($C_{cc}$), according to which the drive unit (16) is capable of controlling the engine load (12), and of the type in which the drive unit (16), when it detects a requirement to switch from an initial transmission ratio ($R_{ti}$) to a new transmission ratio ($R_{tn}$) that is below the initial ratio ($R_{ti}$), the engine torque ($C_m$) being substantially constant or increased, applies a transition strategy (ST) during which it reduces the engine torque ($C_m$),
   **characterized in that** the transition strategy (ST) consists in determining, at regular time intervals ($\tau$), based on the drive torque setting ($C_{cc}$) and based on the maximum power ($P_{max}$) available at the current rotation speed (N) of the engine (12), a limited torque setting ($C_{cl}$) according to which the drive unit (16) controls the engine load (12) so that the increase in power transmitted to the vehicle wheels is progressive between the initial transmission ratio ($R_{ti}$) and the new transmission ratio ($R_{tn}$).

2. Control method according to the preceding claim, **characterized in that** the transition strategy (ST) consists in performing, at regular time intervals ($\tau$), the following operations:

   - determining an effective power ($P_{eff}$) by choosing the lowest value between, on the one hand, a power setting ($P_{cons}$), which is equal to the product of the drive torque setting ($C_{cc}$) by the current rotation speed (N) of the engine (12) and, on the other hand, the maximum power ($P_{max}$) available at the current rotation speed (N) of the engine (12);
   - calculating a filtered power ($P_{fil}$) by applying to the effective power ($P_{eff}$) a filtering algorithm which produces a progressive increase in the filtered power ($P_{fil}$) ;
   - determining the limited torque setting ($C_{cl}$) by choosing the lowest value between the drive torque setting ($C_{cc}$) and the filtered torque ($C_{fil}$), which is equal to the filtered power ($P_{fil}$) related to the current rotation speed (N) of the engine (12).

3. Control method according to the preceding claim, **characterized in that** the drive unit (16) deactivates the transition strategy (ST) when the following two conditions are fulfilled simultaneously:

   - the drive unit (16) has detected the end of the switch from the initial transmission ratio ($R_{ti}$) to the new transmission ratio ($R_{tn}$) ;
   - and the drive torque setting ($C_{cc}$) is below or equal to the filtered torque ($C_{fil}$).

4. Control method according to any one of the preceding claims, **characterized in that** the user substitutes for the torque settings ($C_{cm}$, $C_{cc}$, $C_{cl}$) associated power settings which are obtained respectively by producing the product of each torque setting ($C_{cm}$, $C_{cc}$, $C_{cl}$) by the associated rotation speed (N) of the engine (12).

**Patentansprüche**

1. Verfahren zur Steuerung einer Antriebseinheit (10) eines Kraftfahrzeugs, die einen Motor (12), der von einer elektronischen Steuereinheit (16) gesteuert wird, und ein Schaltgetriebe (14) mit automatischer Gangschaltung (Rt) aufweist, das von einer elektronischen Steuereinheit (18) gesteuert wird, von der Art, bei der die Steuereinheit (16) vom Fahrer und über eine Steuervorrichtung (20) der Beschleunigung eine für die Motordrehmoment-Anforderung ($C_m$), oder Fahrer-Drehmomentsollwert ($C_{cc}$), repräsentative Information empfängt, in Abhängigkeit von der die Steuereinheit (16) die Belastung des Motors (12) steuern kann, und von der Art, bei der die Steuereinheit (16), wenn sie eine Anforderung des Übergangs von einem ursprünglichen Übersetzungsverhältnis ($R_{ti}$) zu einem neuen Übersetzungsverhältnis ($R_{tn}$) geringer als das ursprüngliche Übersetzungsverhältnis ($R_{ti}$) erfasst, wobei das Motordrehmoment ($C_m$) im Wesentlichen konstant oder ansteigend ist, eine Übergangsstrategie (ST) anwendet, während der sie das Motordrehmoment ($C_m$) verringert,
   **dadurch gekennzeichnet, dass** die Übergangsstrategie (ST) darin besteht, in regelmäßigen Zeitintervallen ($\tau$) ausgehend vom Fahrer-Drehmomentsollwert ($C_{cc}$) und ausgehend von der bei der laufenden Drehzahl (N) des Motors (12) verfügbaren maximalen Leistung ($P_{max}$) einen begrenzten Drehmomentsollwert ($C_{cl}$) zu bestimmen, in Abhängigkeit von dem die Steuereinheit (16) die Belastung des Motors (12) steuert, damit die Erhöhung der an die Räder des Fahrzeugs übertragenen Leistung zwischen dem ursprünglichen Übersetzungsverhältnis ($R_{ti}$) und dem

neuen Übersetzungsverhältnis ($R_{tn}$) progressiv ist.

2. Steuerverfahren nach dem vorhergehenden Anspruch, **dadurch gekennzeichnet, dass** die Übergangsstrategie (ST) darin besteht, in regelmäßigen Zeitintervallen ($\tau$) die folgenden Vorgänge durchzuführen:

   - Bestimmen einer effektiven Leistung ($P_{eff}$) durch die Auswahl des kleinsten Werts aus einerseits einem Leistungssollwert ($P_{cons}$), der gleich dem Produkt aus dem Fahrer-Drehmomentsollwert ($C_{cc}$) und der laufenden Drehzahl (N) des Motors (12) ist, und andererseits der bei der laufenden Drehzahl (N) des Motors (12) verfügbaren maximalen Leistung ($P_{max}$);
   - Berechnen einer gefilterten Leistung ($P_{fil}$) durch Anwenden eines Filter-Algorithmus an die effektive Leistung ($P_{eff}$), der eine progressive Erhöhung der gefilterten Leistung ($P_{fil}$) erzeugt;
   - Bestimmen des begrenzten Drehmomentsollwerts ($C_{cl}$) durch Auswahl des geringsten Werts aus dem Fahrer-Drehmomentsollwert ($C_{cc}$) und dem gefilterten Drehmoment ($C_{fil}$), das gleich der gefilterten Leistung ($P_{fil}$) übertragen auf die laufende Drehzahl (N) des Motors (12) ist.

3. Steuerverfahren nach dem vorhergehenden Anspruch, **dadurch gekennzeichnet, dass** die Steuereinheit (16) die Übergangsstrategie (ST) deaktiviert, wenn die zwei folgenden Bedingungen gleichzeitig erfüllt sind:

   - die Steuereinheit (16) hat das Ende des Übergangs vom ursprünglichen Übersetzungsverhältnis ($R_{ti}$) zum neuen Übersetzungsverhältnis ($R_{tn}$) erfasst;
   - und der Fahrer-Drehmomentsollwert ($C_{cc}$) ist geringer als das oder gleich dem gefilterten Drehmoment ($C_{fil}$).

4. Steuerverfahren nach einem der vorhergehenden Ansprüche, **dadurch gekennzeichnet, dass** die Drehmomentsollwerte ($C_{cm}$, $C_{cc}$, $C_{cl}$) durch zugeordnete Leistungssollwerte ersetzt werden, die durch Erzeugen des Produkts aus jedem Drehmomentsollwert ($C_{cm}$, $C_{cc}$, $C_{cl}$) und der zugeordneten Drehzahl (N) des Motors (12) erhalten werden.

**Fig. 1**

**Fig. 2**

**EP 1 223 070 B1**

## RÉFÉRENCES CITÉES DANS LA DESCRIPTION

**Documents brevets cités dans la description**

*   DE 19845157 A